# EUROPÄISCHE PATENTSCHRIFT

(11) **EP 3 837 145 B1**
(45) Veröffentlichungstag und Bekanntmachung des Hinweises auf die Patenterteilung: **08.03.2023**
(21) Anmeldenummer: 19756147.5
(22) Anmeldetag: 14.08.2019
(51) Int. Cl.: B60T 17/22, F16D 66/00, F16D 66/02, H02K 1/00

(54) **ZAHNHALTEBREMSE FÜR EINE FAHRZEUGTÜR UND VERFAHREN ZUM BETREIBEN EINER ZAHNHALTEBREMSE**
TOOTHED HOLDING BRAKE FOR A VEHICLE DOOR AND METHOD FOR OPERATING A TOOTHED HOLDING BRAKE
FREIN DE RETENUE DE DENT POUR PORTE DE VÉHICULE ET PROCÉDÉ DE FONCTIONNEMENT D'UN FREIN DE RETENUE DE DENT

(30) Priorität: 17.08.2018 DE 102018120116
(43) Veröffentlichungstag der Anmeldung: 23.06.2021
(73) Patentinhaber: Knorr-Bremse Gesellschaft mit beschränkter Haftung, 2340 Mödling (AT)
(72) Erfinder: HIRTENLEHNER, Thomas, 3354 Wolfsbach (AT); JETZINGER, Peter, 4470 Enns (AT)
(74) Vertreter: Aurigium Leischner & Luthe
(86) Internationale Anmeldenummer: PCT/EP2019/071775
(87) Internationale Veröffentlichungsnummer: WO 2020/035517

(56) Entgegenhaltungen:
- WO-A1-02/21022
- WO-A1-2010/001827
- WO-A1-2016/187631
- DE-A1- 19 719 990
- FR-A1- 2 856 854
- US-A- 3 400 797
- US-A1- 2008 156 594
- US-A1- 2012 019 050

## Beschreibung

Die vorliegende Erfindung bezieht sich auf eine Zahnhaltebremse für eine Tür für ein Fahrzeug und auf ein Verfahren zum Betreiben einer Zahnhaltebremse.

Bei Zahnhaltebremsen für Türbremssysteme für Fahrzeuge ist es wichtig, einen verriegelten und einen entriegelten Zustand der Zahnhaltebremse detektieren zu können.

Die WO 2016/187631 A1 beschreibt eine Vorrichtung zum Erkennen der momentanen Position eines mittels eines elektromagnetischen Feldes zwischen zwei Positionen hin und her bewegbaren Bauteils, insbesondere der beweglichen Gegenscheibe einer Zahnscheibe, einer magnetisch bzw. elektromagnetisch betätigbaren Bremse bzw. Kupplung, insbesondere im Türantrieb eines Fahrzeuges wie eines Eisenbahnwaggons. Dokument US 3 400 797 A offenbart eine elektromagnetische Kupplung oder Bremse mit Doppelspulen.

Vor diesem Hintergrund ist es die Aufgabe der vorliegenden Erfindung eine verbesserte Zahnhaltebremse für eine Tür für ein Fahrzeug sowie ein Verfahren zum Betreiben einer verbesserten Zahnhaltebremse zu schaffen.

Diese Aufgabe wird durch eine Zahnhaltebremse für eine Tür für ein Fahrzeug sowie ein Verfahren zum Betreiben einer Zahnhaltebremse gemäß den Hauptansprüchen gelöst.

Die mit dem vorgestellten Ansatz erreichbaren Vorteile bestehen darin, dass eine Zahnhaltebremse mit einer Ankerscheibe geschaffen wird, mit der unter Verwendung eines sehr einfachen Funktionsprinzips ein Entriegelungszustand sowie ein Verriegelungszustand der Zahnhaltebremse schnell und einfach durch ein Abtasten der Ankerscheibe sicher detektierbar ist. Vorteilhafterweise kann dabei die Ankerscheibe direkt abgetastet werden, sodass keine zusätzlichen Bauteile erforderlich sind.

Eine Zahnhaltebremse für eine Tür für ein Fahrzeug weist eine Welle, eine Ankerscheibe, eine Magneteinrichtung und eine Detektionseinrichtung auf. Die Welle formt an einem Ende ein Mitnahmeelement mit einer Mitnahmehauptoberfläche mit einem Mitnahmezahnkranz aus, der eine Mehrzahl von Mitnahmezähnen aufweist. Die Ankerscheibe weist eine erste Hauptoberfläche und eine der ersten Hauptoberfläche gegenüberliegend angeordnete zweite Hauptoberfläche auf, wobei an der zweiten Hauptoberfläche ein Ankerscheibenzahnkranz mit einer Mehrzahl von Ankerzähnen angeordnet ist. Die Ankerscheibe ist in einer Verriegelungsstellung derart angeordnet, dass die Ankerzähne in die Mitnahmezähne greifen, um ein Drehen der Welle in zumindest einer Richtung zu verhindern und in einer Entriegelungsstellung derart angeordnet, dass die Ankerzähne beabstandet zu den Mitnahmezähnen angeordnet sind, um das Drehen der Welle in beide Richtungen freizugeben. Die Magneteinrichtung weist eine der Ankerscheibe zugewandt angeordnete Magnethauptoberfläche auf, wobei die Magneteinrichtung dazu ausgebildet ist, um die Ankerscheibe zwischen der Verriegelungsstellung und der Entriegelungsstellung zu bewegen. In der Verriegelungsstellung der Ankerscheibe sind die erste Hauptoberfläche der Ankerscheibe und die Magnethauptoberfläche im Wesentlichen schräg zueinander verlaufend angeordnet. Die Detektionseinrichtung ist dazu ausgebildet, um die Verriegelungsstellung und zusätzlich oder alternativ die Entriegelungsstellung zu detektieren.

Bei der hier vorgestellten Zahnhaltebremse, die auch als eine Sicherheitsbremse bezeichnet werden kann, ist ein Kupplungsstück mit einer Verzahnung, hier also die Ankerscheibe, durch beispielsweise elektromagnetische Kräfte zwischen einer Position, die einer Verriegelungsstellung entspricht, und einer Position, die einer freigegebenen Entriegelungsstellung entspricht, hin und her beweglich. Die Zahnhaltebremse ist zur Verwendung für einen Türantrieb für beispielsweise eine Eisenbahntür einsetzbar, aber auch für eine Lifttür, und kann auch bei Aufzügen, bei Seilzügen und jeder Art von Kraft- oder Momentübertragung verwendet werden. Für die Zahnhaltebremse ist es bedeutsam, eine momentane oder aktuelle Position der Ankerscheibe einer Regel- und Steuervorrichtung mitzuteilen, um diese Position überwachen und einen Betrieb der gesamten mit der Zahnhaltebremse in Verbindung stehenden Anlage danach regeln zu können.

Die Ankerscheibe kann auch als ein Ankerelement bezeichnet werden. Als eine Hauptoberfläche ist eine gegenüber weiteren möglichen Oberflächen eines Elements größere oder größte Oberfläche zu verstehen. Eine solche Hauptoberfläche kann beispielsweise eine Oberseite oder Unterseite oder eine Vorderseite oder Rückseite eines insgesamt flachen oder scheibenförmigen Elements sein. Der Ankerscheibenzahnkranz ist vorteilhafterweise mit dem Mitnahmezahnkranz des Mitnahmeelements formschlüssig koppelbar, beispielsweise verzahnbar, ausgeformt. Der Ankerscheibenzahnkranz kann auf der zweiten Hauptoberfläche oder in einer in der zweiten Hauptoberfläche angeordneten Ausnehmung angeordnet sein. Somit können die Ankerzähne des Ankerscheibenzahnkranzes vollständig oder teilweise über die zweite Hauptoberfläche hinausragen oder gegenüber der zweiten Hauptoberfläche versenkt angeordnet sein. Entsprechend kann der Mitnahmezahnkranz auf der Mitnahmehauptoberfläche oder in einer in der Mitnahmehauptoberfläche angeordneten Ausnehmung angeordnet sein. Somit können die Mitnahmezähne des Mitnahmezahnkranzes vollständig oder teilweise über die Mitnahmehauptoberfläche hinausragen oder gegenüber der Mitnahmehauptoberfläche versenkt angeordnet sein. Dass die erste Hauptoberfläche der Ankerscheibe und die Magnethauptoberfläche im Wesentlichen schräg zueinander verlaufend angeordnet sind, kann bedeuten, dass die erste Hauptoberfläche und die Magnethauptoberfläche entlang einer gesamten Länge oder eines größeren Anteils der Länge der Ankerscheibe und der Magnethauptoberfläche schräg zueinander verlaufen. Beispielsweise kann in der Verriegelungsstellung mehr als die Hälfte einer Länge der ersten Hauptoberfläche schräg zu der Magnethauptoberfläche oder mehr als die Hälfte einer Länge der Magnethauptoberfläche schräg zu der ersten Hauptoberfläche angeordnet sein. Beispielsweise kann aber auch die gesamte Länge der ersten Hauptoberfläche schräg zu der Magnethauptoberfläche oder die gesamte Länge der Magnethauptoberfläche schräg zu der ersten Hauptoberfläche angeordnet sein. Auf diese Weise kann in der Verriegelungsstellung zwischen der Ankerscheibe und der Magneteinrichtung ein keilförmiger Luftspalt angeordnet sein. Entlang eines solchen keilförmigen Luftspalts ist die Ankerscheibe zwischen der Entriegelungsstellung und der Verriegelungsstellung kippbar angeordnet.

Die Ankerscheibe kann eine erste Seite und eine der ersten Seite gegenüberliegende zweite Seite aufweisen. Als die erste Seite und die zweite Seite können zwei gegenüberliegende Endabschnitte der Ankerscheibe verstanden werden. Die erste Seite kann aber auch eine von zwei im Wesentlichen gleich oder ähnlich großen Hälften der Ankerscheibe oder zweiten Hauptoberfläche sein und die zweite Seite die andere Hälfte. Der Ankerscheibenzahnkranz kann abschnittsweise durch die erste Seite und abschnittsweise durch die zweite Seite verlaufen. Dabei kann die erste Seite eine der Detektionseinrichtung zugewandte und die zweite Seite eine der Detektionseinrichtung abgewandte Seite repräsentieren. Die Detektionseinrichtung kann somit der ersten Seite der Ankerscheibe gegenüberliegend angeordnet sein. Die zweite Seite kann einem Montageteil zum Montieren der Zahnhaltebremse an der Tür zugewandt angeordnet sein. Beispielsweise kann das Montageteil ein Flügel der Zahnhaltebremse sein.

Die Ankerscheibe kann zwischen der Magneteinrichtung und der Welle angeordnet sein. Dabei kann in der Verriegelungsstellung zwischen der Magneteinrichtung und der Ankerscheibe ein keilförmiger Luftspalt angeordnet sein. Der Luftspalt kann senkrecht zu den Ankerzähnen verlaufend angeordnet sein. Somit kann die Ankerscheibe zwischen der Verriegelungsstellung und der Entriegelungsstellung zwischen der Magneteinrichtung und dem Mitnahmeelement der Welle unter Verwendung eines Magnetfelds hin und her bewegt werden. In der Entriegelungsstellung kann die Ankerscheibe der Magneteinrichtung zugewandt oder an der Magneteinrichtung anliegend angeordnet sein.

Von Vorteil ist es hierbei, wenn der Luftspalt an der ersten Seite der Ankerscheibe breiter ist, als an der zweiten Seite der Ankerscheibe. Ein derartiger Luftspalt ermöglicht einen großen Hub im Bereich der ersten Seite der Ankerscheibe und zugleich eine große Magnetkraft im Bereich der zweiten Seite der Ankerscheibe.

Gemäß einer Ausführungsform kann die Ankerscheibe keilförmig ausgeformt sein. Auf diese Weise lässt sich in der Verriegelungsstellung ein keilförmiger Luftspalt zwischen der Ankerscheibe und der Magneteinrichtung realisieren.

Hierbei kann ein Abstand zwischen der ersten Hauptoberfläche der Ankerscheibe und der zweiten Hauptoberfläche der Ankerscheibe an der ersten Seite der Ankerscheibe kleiner sein, als an der der ersten Seite gegenüberliegenden zweiten Seite der Ankerscheibe. Dabei können die erste und die zweite Hauptoberfläche zwischen der ersten Seite und der zweiten Seite im Wesentlichen schräg zueinander verlaufend angeordnet sein. Wesentlichen schräg kann bedeuten, dass die erste Hauptoberfläche und die zweite Hauptoberfläche entlang einer gesamten Länge oder eines größeren Anteils der Länge zwischen der ersten Seite und der zweiten Seite der Ankerscheibe schräg zueinander verlaufen. Auf diese Weise kann die Ankerscheibe keilförmig ausgeformt sein. Beispielsweise kann mehr als die Hälfte einer Länge der zweiten Hauptoberfläche zwischen der ersten und der zweiten Seite schräg zu der ersten Hauptoberfläche, also keilförmig ausgestaltet, angeordnet sein. Beispielsweise kann aber auch die gesamte Länge der zweiten Hauptoberfläche zwischen der ersten und der zweiten Seite schräg zu der ersten Hauptoberfläche oder die gesamte Länge der ersten Hauptoberfläche zwischen der ersten und der zweiten Seite schräg zu der zweiten Hauptoberfläche, also komplett keilförmig ausgestaltet, angeordnet sein.

Durch eine hier vorgestellte keilförmige Ankerscheibe wird eine schräge oder gekippte oder kippbare Anordnung der Ankerscheibe zwischen der Magneteinrichtung und dem Mitnahmeelement ermöglicht. Ein Hub zwischen der Magneteinrichtung und dem Mitnahmeelement, entlang dessen sich die Ankerscheibe zwischen der Entriegelungsstellung und der Verriegelungsstellung bewegt, kann hierbei vorteilhafterweise an der ersten Seite derart lang bemessen sein, dass zur Detektion der Entriegelungsstellung und der Verriegelungsstellung als die Detektionseinrichtung ein Endschalter einsetzbar ist, der dazu ausgebildet ist, um die Entriegelungsstellung und die Verriegelungsstellung der Ankerscheibe vorteilhafterweise durch einen direkten mechanischen Kontakt zu der Ankerscheibe zu detektieren. An der zweiten Seite kann der Hub kleiner sein als an der ersten Seite, um das Bewegen der Ankerscheibe durch die Magneteinrichtung sicherstellen zu können.

Eine Erstreckungslänge zumindest einer Mehrzahl von sich auf der ersten Seite befindlichen Ankerzähnen kann gleich einer Erstreckungslänge zumindest einer Mehrzahl von sich auf der zweiten Seite befindlichen Ankerzähnen sein. Zusätzlich oder alternativ kann eine weitere Erstreckungslänge einer Mehrzahl von sich auf einer weiteren ersten Seite der Mitnahmehauptoberfläche befindlichen Mitnahmezähnen größer als eine weitere Erstreckungslänge zumindest einer Mehrzahl von sich auf einer gegenüberliegenden weiteren zweiten Seite der Mitnahmehauptoberfläche befindlichen Mitnahmezähnen sein. Auf diese Weise können der Ankerscheibenzahnkranz sowie der Mitnahmezahnkranz mit durchgängig identischen Zähnen ausgeformt sein.

Alternativ kann aber auch eine Erstreckungslänge zumindest einer Mehrzahl von sich auf der ersten Seite befindlichen Ankerzähnen größer sein, als eine Erstreckungslänge zumindest einer Mehrzahl von sich auf der zweiten Seite befindlichen Ankerzähnen und zusätzlich oder alternativ kann eine weitere Erstreckungslänge einer Mehrzahl von sich auf einer weiteren ersten Seite der Mitnahmehauptoberfläche befindlichen Mitnahmezähnen gleich einer weiteren Erstreckungslänge zumindest einer Mehrzahl von sich auf einer gegenüberliegenden weiteren zweiten Seite der Mitnahmehauptoberfläche befindlichen Mitnahmezähnen sein. Somit können die Ankerzähne oder die Mitnahmezähne in einem der Detektionseinrichtung zugewandt angeordneten Kranzabschnitt des Zahnkranzes länger sein als in einem der Detektionseinrichtung abgewandten weiteren Kranzabschnitt. Hierdurch ist eine kompakte Ausgestaltung der Ankerscheibe insgesamt möglich. Sehr lange Ankerzähne oder Mitnahmezähne im Bereich der Detektionseinrichtung ermöglichen außerdem eine zwischen der Entriegelungsstellung und der Verriegelungsstellung befindliche Teilverriegelungsstellung oder einen entsprechenden Teilverriegelungszustand, in dem die Zahnüberdeckung geringer als in der Verriegelungsstellung ist.

Von Vorteil ist es weiterhin, wenn ein erster Oberflächenabschnitt der ersten Hauptoberfläche an der zweiten Seite der Ankerscheibe und ein gegenüberliegender zweiter Oberflächenabschnitt der zweiten Hauptoberfläche an der zweiten Seite parallel zueinander angeordnet sind. Die genannten Oberflächenabschnitte können beispielsweise einen Randabschnitt aufweisen, der beispielsweise eine Länge von einem Siebtel einer Gesamtlänge der ersten und zusätzlich oder alternativ zweiten Hauptoberfläche repräsentieren kann. In der Verriegelungsstellung der Ankerscheibe können der Randabschnitt der zweiten Hauptoberfläche der Ankerscheibe und die Magnethauptoberfläche im Wesentlichen parallel zueinander verlaufend angeordnet sein. Dadurch lässt sich beim Übergang von der Verriegelungsstellung in die Entriegelungsstellung eine Kippbewegung realisieren. Wenn der zweite Randabschnitt somit parallel zu der Magneteinrichtung angeordnet oder anordenbar ist, ermöglicht das eine hohe Magnetkraft auf die Ankerscheibe.

Gemäß einer Ausführungsform kann die Magnethauptoberfläche im Wesentlichen schräg gegenüber der Mitnahmehauptoberfläche verlaufend angeordnet sein. Die Magneteinrichtung kann somit aufseiten der Ankerscheibe abgeschrägt sein. Dies erlaubt eine Verwendung der Ankerscheibe, bei der die erste Hauptoberfläche und die zweite Hauptoberfläche parallel zueinander verlaufend angeordnet sind, wobei in der Verriegelungsstellung dennoch der keilförmige Luftspalt zwischen der Magnethauptoberfläche und der ersten Hauptoberfläche realisiert wird.

Gemäß einer vorteilhaften Ausführungsform kann die Detektionseinrichtung dazu angeordnet und ausgebildet sein, um in der Verriegelungsstellung die Ankerscheibe mechanisch zu kontaktieren. Zusätzlich oder alternativ kann die Detektionseinrichtung in der Entriegelungsstellung und in einem sich zwischen der Entriegelungsstellung und der Verriegelungsstellung befindlichen Teilverriegelungszustand angeordnet und ausgebildet sein, um die Ankerscheibe nicht zu kontaktieren. Die Detektionseinrichtung kann auch dazu ausgebildet sein, um ansprechend auf das Kontaktieren ein Verriegelungssignal auszugeben. Zusätzlich oder alternativ kann die Detektionseinrichtung dazu ausgebildet sein, um ansprechend auf kein Kontaktieren ein Entriegelungssignal auszugeben. Die Teilverriegelungsstellung oder der Teilverriegelungszustand kann als ein Zustand verstanden werden, in dem ein Zahneingriff der Ankerzähne in die Mitnahmezähne geringer ist, als in der Verriegelungsstellung. Durch den beschriebenen direkten mechanischen Kontakt ist das Detektieren der beschriebenen Stellungen schnell und einfach ohne weitere Bauteile eindeutig ermöglicht.

Von Vorteil ist es weiterhin, wenn die Detektionseinrichtung gemäß einer Ausführungsform an der ersten Seite der Ankerscheibe angeordnet ist. Die erste Seite kann einen ersten Randabschnitt der Ankerscheibe aufweisen, der die Detektionseinrichtung in der Verriegelungsstellung kontaktiert. Da bei einer keilförmigen Ankerscheibe die erste Seite schmaler ausgeformt ist, als die zweite Seite, ist im Bereich der ersten Seite ein besonders großer Hub zwischen der Magneteinrichtung und der Ankerscheibe ermöglicht. Auch bei einer parallelen Ankerscheibe mit schräg verlaufender Magnethauptoberfläche ist im Bereich der ersten Seite ein besonders großer Hub zwischen der Magneteinrichtung und der Ankerscheibe ermöglicht. Beispielsweise ist somit ein Hub von mehr als zwei oder mehr als drei Millimetern realisierbar. Ein derart großer Hub ist für eine sichere Detektion der Detektionseinrichtung, beispielsweise in Form eines Endschalters, wesentlich.

Ein Verfahren zum Betreiben einer Zahnhaltebremse in einer der vorangehend beschriebenen Varianten umfasst einen Schritt des Bewirkens und einen Schritt des Herbeiführens. Im Schritt des Bewirkens wird ein Bewegen der Ankerscheibe von der Entriegelungsstellung in die Verriegelungsstellung bewirkt, um das Drehen der Welle in zumindest einer Richtung zu verhindern. Im Schritt des Herbeiführens wird ein Bewegen der Ankerscheibe von der Verriegelungsstellung in die Entriegelungsstellung herbeigeführt, um das Drehen der Welle in beide Richtungen freizugeben.

Ausführungsbeispiele der hier vorgestellten Erfindung werden in der nachfolgenden Beschreibung mit Bezug zu den Figuren näher erläutert. Es zeigen:
Fig. 1 eine schematische Darstellung eines Fahrzeugs mit einer Tür mit einer Zahnhaltebremse gemäß einem Ausführungsbeispiel;
Fig. 2 bis 5 je eine schematische Querschnittsdarstellung einer Zahnhaltebremse gemäß einem Ausführungsbeispiel;
Fig. 6 ein Zustandsdiagramm einer Verzahnung einer Zahnhaltebremse gemäß einem Ausführungsbeispiel;
Fig. 7 eine seitliche Querschnittsdarstellung einer Ankerscheibe einer Zahnhaltebremse gemäß einem Ausführungsbeispiel;
Fig. 8 eine perspektivische Aufsicht auf eine Ankerscheibe einer Zahnhaltebremse gemäß einem Ausführungsbeispiel;
Fig. 9 eine perspektivische Aufsicht auf eine Ankerscheibe einer Zahnhaltebremse gemäß einem Ausführungsbeispiel;
Fig. 10 eine seitliche Querschnittsdarstellung einer Ankerscheibe einer Zahnhaltebremse gemäß einem Ausführungsbeispiel;
Fig. 11 eine schematische Querschnittsdarstellung einer Zahnhaltebremse gemäß einem Ausführungsbeispiel;
Fig. 12 eine schematische Querschnittsdarstellung einer Zahnhaltebremse gemäß einem Ausführungsbeispiel; und
Fig. 13 ein Ablaufdiagramm eines Verfahrens zum Betreiben einer Zahnhaltebremse gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

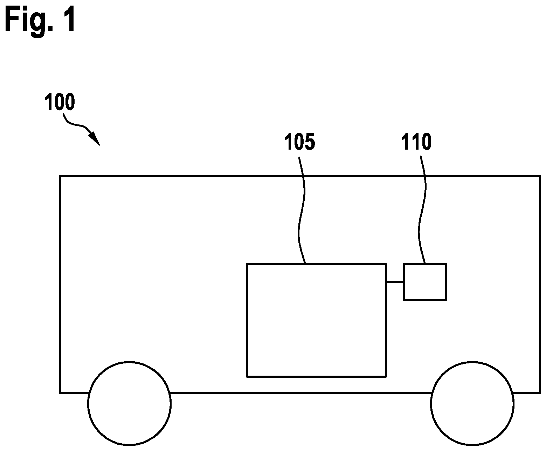

**Fig. 1** zeigt eine schematische Darstellung eines Fahrzeugs 100 mit einer Tür 105 mit einer Zahnhaltebremse 110 gemäß einem Ausführungsbeispiel.

Lediglich beispielhaft ist die Zahnhaltebremse 110 gemäß diesem Ausführungsbeispiel an der Tür 105 des Fahrzeugs 100 angeordnet, welches gemäß diesem Ausführungsbeispiel als ein Schienenfahrzeug ausgeformt ist.

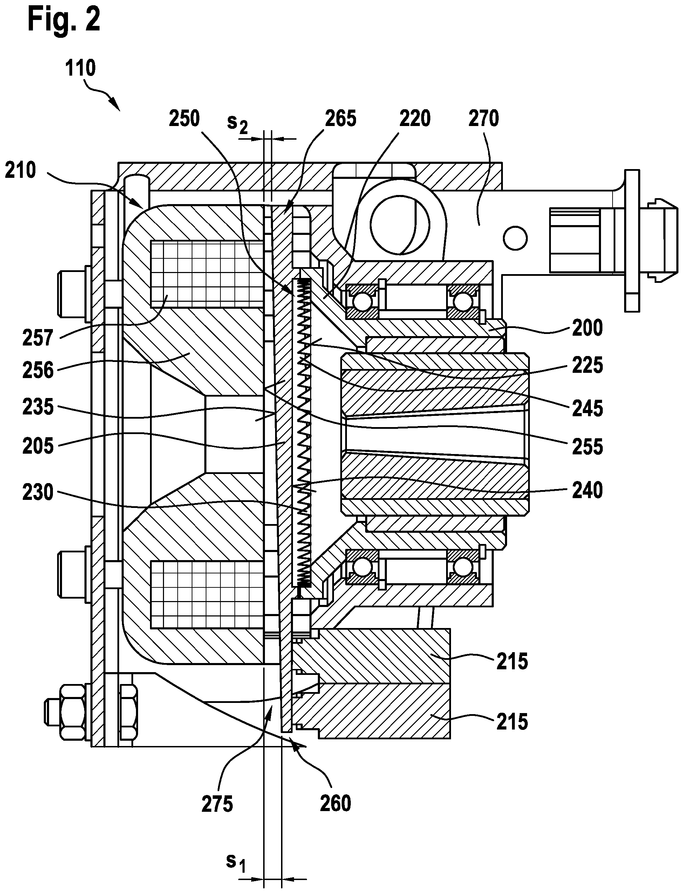

Die Zahnhaltebremse 110 ist gemäß diesem Ausführungsbeispiel mit einem Montageteil starr an einem Wagenkasten oder Türrahmen der Tür 105 befestigt. Gemäß einem Ausführungsbeispiel handelt es sich bei dem Montageteil um einen Flügel, siehe hierzu auch Figur 2. Die Zahnhaltebremse 110 umfasst eine Welle, die bei einer Betätigung der Tür 105 um eine Achse drehbar ist. Die Welle, die auch als Betätigungswelle bezeichnet werden kann, weist einem Ende einen Mitnahmezahnkranz auf oder ist drehfest und/oder axialfest mit einem Mitnahmezahnkranz verbunden.

Die Zahnhaltebremse 110 dient gemäß diesem Ausführungsbeispiel bei einer Betätigung der Tür 105, gemäß diesem Ausführungsbeispiel einer Eisenbahntür, dazu, eine Drehung der Welle entweder freizugeben oder zu sperren. Um eine Freigabe oder ein Sperren der Welle zu bewirken, ist in der Zahnhaltebremse 110 eine Ankerscheibe als eine Gegenscheibe für das Mitnahmeelement der Welle drehfest angeordnet. Die Ankerscheibe ist in Richtung der Achse der Welle zwischen zwei Positionen beweglich angeordnet, sodass ein Ankerscheibenzahnkranz der Ankerscheibe entweder in den Mitnahmezahnkranz des Mitnahmeelements eingreift, um die Welle zu sperren, oder nicht eingreift, um die Welle freizugeben.

Die Figuren 2, 3, 5 11 und 12 zeigen eine geschlossene oder blockierende Position, welche im Folgenden als Verriegelungsstellung bezeichnet wird, in der ein Ankerscheibenzahnkranz der beweglichen Ankerscheibe mit den Mitnahmezähnen des Mitnahmeelements kämmt und dieses zusammen mit der Welle daher in zumindest einer Richtung hindert. In der Verriegelungsstellung wird eine Drehung des Mitnahmeelements in beide Richtungen durch die Ankerscheibe verhindert. Wenn die Zahnhaltebremse 110 einen optionalen Freilauf umfasst, ist die Drehung eines durch den Freilauf freigegebenen Abschnitts der Welle in der Verriegelungsstellung in einer Richtung möglich, in der anderen Richtung jedoch gesperrt.

In dieser Verriegelungsstellung befindet sich ein Spalt zwischen der Magneteinrichtung und der Ankerscheibe, der gemäß einem Ausführungsbeispiel keilförmig ausgeformt ist.

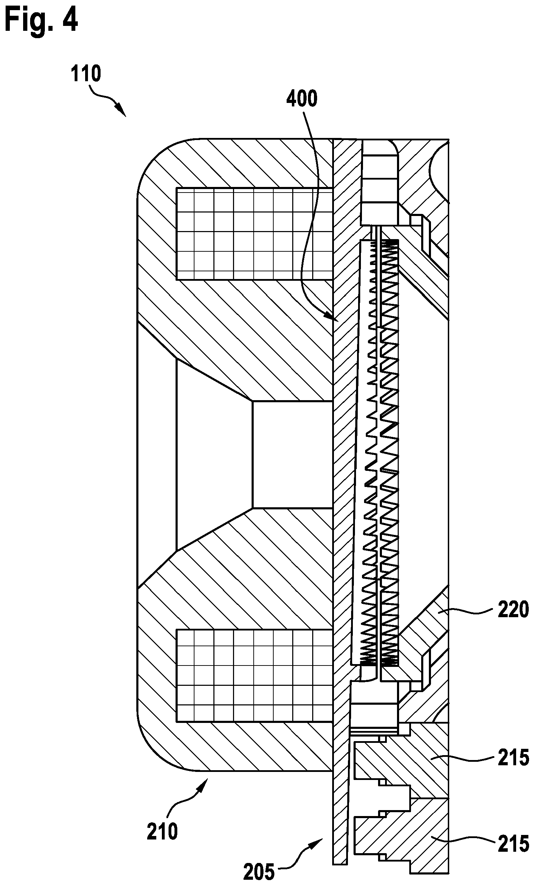

Die in Fig. 4 gezeigte Situation zeigt die Zahnhaltebremse 110 im freigegebenen Zustand, dieser wird im Folgenden als eine Entriegelungsstellung bezeichnet, in der die Ankerscheibe durch elektromagnetische Kräfte eines Magneten der Magneteinrichtung so weit zu der Magneteinrichtung und weg von dem Mitnahmeelement gezogen angeordnet ist, dass die Zähne der beiden Zahnkränze außer Eingriff kommen, das Mitnahmeelement und damit die Welle können in der Entriegelungsstellung der Ankerscheibe frei rotieren. Somit kann sich die Welle in der Entriegelungsstellung in beide Richtungen drehen.

Optional weist die Welle einen Freilauf auf. Beispielsweise ist der Freilauf vorgesehen, um eine Drehung der Betätigungswelle in einer Richtung, gemäß einem Ausführungsbeispiel ist dies die Schließrichtung der Tür 105, stets zuzulassen.

**Fig. 2** zeigt eine schematische Querschnittsdarstellung einer Zahnhaltebremse 110 gemäß einem Ausführungsbeispiel. Dabei kann es sich um ein Ausführungsbeispiel der anhand von Fig. 1 beschriebenen Zahnhaltebremse 110 handeln.

Die Zahnhaltebremse 110 weist die Welle 200, die Ankerscheibe 205, die Magneteinrichtung 210 und eine Detektionseinrichtung 215 auf. Die Welle 200 formt an einem Ende das Mitnahmeelement 220 mit einer Mitnahmehauptoberfläche 225 mit dem Mitnahmezahnkranz 230 aus, der eine Mehrzahl von Mitnahmezähnen aufweist.

Die Ankerscheibe 205 weist eine erste Hauptoberfläche 235 und eine der ersten Hauptoberfläche 235 gegenüberliegend angeordnete zweite Hauptoberfläche 240 auf, wobei an der zweiten Hauptoberfläche 240 der Ankerscheibenzahnkranz 245 mit einer Mehrzahl von Ankerzähnen angeordnet ist. Die Ankerscheibe 205 ist in der Verriegelungsstellung 250 derart angeordnet, dass die Ankerzähne in die Mitnahmezähne greifen, um ein Drehen der Welle 200 in beiden Richtungen, oder bei Vorhandensein eines Freilaufs in einer Richtung, zu verhindern und in einer Entriegelungsstellung derart angeordnet, dass die Ankerzähne beabstandet zu den Mitnahmezähnen angeordnet sind, um das Drehen der Welle 200 in beide Richtungen freizugeben.

Die Magneteinrichtung 210 weist eine der Ankerscheibe 205 zugewandt angeordnete Magnethauptoberfläche 255 auf, wobei die Magneteinrichtung 210 dazu ausgebildet ist, um die Ankerscheibe 205 zwischen der Verriegelungsstellung 250 und der Entriegelungsstellung zu bewegen. In der Verriegelungsstellung 250 der Ankerscheibe 205 sind die erste Hauptoberfläche 235 der Ankerscheibe 205 und die Magnethauptoberfläche 255 im Wesentlichen schräg zueinander verlaufend angeordnet.

Die Detektionseinrichtung 215 ist dazu ausgebildet, um die Verriegelungsstellung 250 und zusätzlich oder alternativ die Entriegelungsstellung zu detektieren.

Gemäß diesem Ausführungsbeispiel ist die Ankerscheibe 205 in der Verriegelungsstellung 250 angeordnet. Die Ankerscheibe 205 ist zwischen der Magneteinrichtung 210 und dem Mitnahmeelement 220 angeordnet. Die erste Hauptoberfläche 235 der Ankerscheibe 205 ist gemäß diesem Ausführungsbeispiel der Magnethauptoberfläche 255 zugewandt angeordnet und die zweite Hauptoberfläche 240 der Ankerscheibe 205 ist gemäß diesem Ausführungsbeispiel der Mitnahmehauptoberfläche 225 zugewandt angeordnet. Gemäß diesem Ausführungsbeispiel ist die Ankerscheibe 205 schräg gegenüber der Magnethauptoberfläche 255 angeordnet. Die Magneteinrichtung 210 umfasst gemäß diesem Ausführungsbeispiel einen Magnetkörper 256 und eine in dem Magnetkörper 256 aufgenommene Magnetspule 257. Die Magnethauptoberfläche 255 und eine der Magnethauptoberfläche 255 gegenüberliegende weitere Magnethauptoberfläche der Magneteinrichtung 210 sind beispielhaft parallel zueinander verlaufend angeordnet.

Ein Abstand zwischen der ersten Hauptoberfläche 235 der Ankerscheibe 205 und der zweiten Hauptoberfläche 240 der Ankerscheibe 205 ist gemäß diesem Ausführungsbeispiel an einer ersten Seite 260 der Ankerscheibe 205 kleiner, als an einer der ersten Seite 260 gegenüberliegenden zweiten Seite 265 der Ankerscheibe 205, wobei die zweite Hauptoberfläche 240 gemäß diesem Ausführungsbeispiel zwischen der ersten Seite 260 und der zweiten Seite 265 im Wesentlichen schräg gegenüber der ersten Hauptoberfläche 235 oder gemäß einem alternativen Ausführungsbeispiel die erste Hauptoberfläche 235 im Wesentlichen schräg gegenüber der zweiten Hauptoberfläche 240 verlaufend angeordnet ist. Gemäß diesem Ausführungsbeispiel ist die Ankerscheibe 205 keilförmig ausgeformt.

Die Detektionseinrichtung 215 ist gemäß diesem Ausführungsbeispiel dazu angeordnet und ausgebildet, um in der Verriegelungsstellung 250 die Ankerscheibe 205 mechanisch zu kontaktieren und/oder in der Entriegelungsstellung und in einem sich zwischen der Entriegelungsstellung und der Verriegelungsstellung befindlichen Teilverriegelungszustand die Ankerscheibe 205 nicht zu kontaktieren. Gemäß diesem Ausführungsbeispiel kontaktiert die Detektionseinrichtung 215, welche in Form zumindest eines Endschalters ausgeformt ist, die Ankerscheibe 205 an der zweiten Hauptoberfläche 240. Die Detektionseinrichtung 215 ist gemäß diesem Ausführungsbeispiel an der ersten Seite 260 der Ankerscheibe 206 angeordnet.

Ein Flügel 270, der gemäß einem Ausführungsbeispiel dazu ausgeformt ist, um die Zahnhaltebremse 110 an einem Karosserieteil eines Fahrzeugs zu befestigen, ist gemäß diesem Ausführungsbeispiel der zweiten Seite 265 zugewandt und/oder der Detektionseinrichtung 215 gegenüberliegend angeordnet.

In der hier dargestellten Verriegelungsstellung 250 ist zwischen der Magneteinrichtung 210 und der Ankerscheibe 205 ein keilförmiger Luftspalt 275 angeordnet. Der Luftspalt 275 ist gemäß diesem Ausführungsbeispiel an der ersten Seite 260 der Ankerscheibe 205 breiter, als an der zweiten Seite 265 der Ankerscheibe 205.

Im Folgenden werden Ausführungsbeispiele der Zahnhaltebremse 110 noch einem mit anderen Worten beschrieben:
Ein Hintergrund des hier vorgestellten Ansatzes ist es, einen aktuellen Zustand, entweder verriegelt oder entriegelt, einer Zahnhaltebremse mithilfe von Endschaltern detektieren zu können. Hierzu weist die Zahnhaltebremse 110 die Detektionseinrichtung 215 auf, welche gemäß diesem Ausführungsbeispiel zwei übereinander angeordnete Endschalter aufweist. Bei der hier vorgestellten Zahnhaltebremse 110 ist dieser Zustand vorteilhafterweise direkt, also ohne eine Übersetzung oder ein zusätzliches Schaltelement detektierbar, da das Verriegelungselement in Form der Ankerscheibe 205 direkt abgetastet wird.

Bei der hier vorgestellten Zahnhaltebremse 110 ist eine Huberweiterung durch die als eine Schrägscheibe ausgeformte Ankerscheibe 205 realisiert. Da die verwendeten Endschalter der Detektionseinrichtung 215 einen Hub von mehr als zwei oder drei Millimetern benötigen, um ordnungsgemäß detektieren zu können, weist die Ankerscheibe 205 gemäß diesem Ausführungsbeispiel einen erforderlichen Hub von zwei bis vier Millimetern auf. Der Luftspalt 275 entspricht dem Hub der Ankerscheibe 205. Gemäß diesem Ausführungsbeispiel weist die Ankerscheibe 205 zwischen der Entriegelungsstellung und der Verriegelungsstellung 250 zwischen der Magneteinrichtung 210 und der Detektionseinrichtung 215 einen Hub von mehr als drei Millimetern auf. Anders ausgedrückt ist ein Abstand zwischen der Magneteinrichtung 210 und der Detektionseinrichtung 215 oder eine Breite eines ersten Luftspaltabschnitts s₁ des Luftspalts 275 zwischen der Magneteinrichtung 210 und der Detektionseinrichtung 215 gemäß diesem Ausführungsbeispiel mehr als drei Millimeter groß. Da bei einer Erhöhung des Hubes auch der Luftspalt 275 im Magnetkreis erhöht oder verbreitert wird und eine erforderliche Magnetkraft zum Entriegeln dadurch geringer wird, ist der Hub im Bereich der zweiten Seite 265 nicht erhöht. Gemäß diesem Ausführungsbeispiel ist eine Breite eines zweiten Luftspaltabschnitts s₂ des Luftspalts 275 im Bereich der zweiten Seite 265 kleiner als die Breite des ersten Luftspaltabschnitts s₁. Dadurch können auch die erforderlichen Magnetkräfte erreicht werden, obwohl im Bereich der Endschalter eine Huberweiterung realisiert wurde. Dieser unterschiedlich breite Luftspalt 275 ist gemäß diesem Ausführungsbeispiel durch die schräge oder keilförmige Ankerscheibe 205 realisiert.

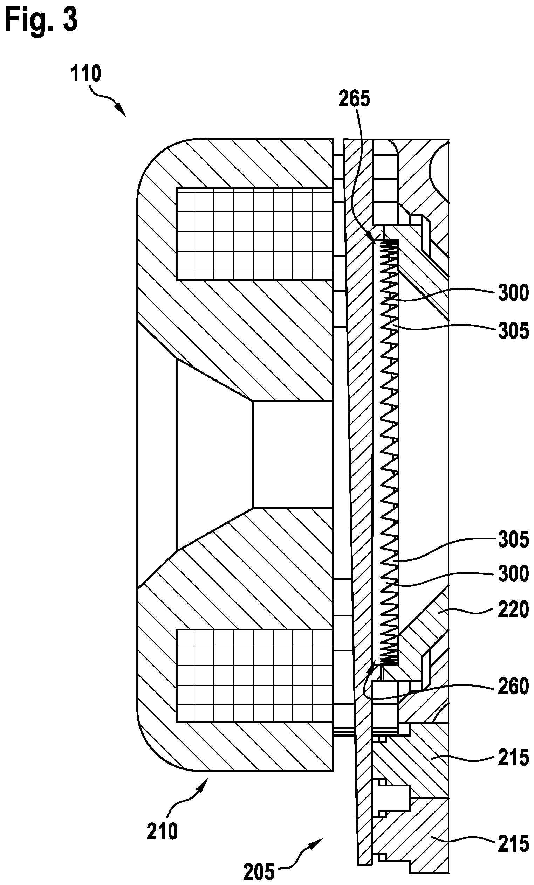

**Fig. 3** zeigt eine schematische Querschnittsdarstellung einer Zahnhaltebremse 110 gemäß einem Ausführungsbeispiel. Dabei kann es sich um einen Ausschnitt der in Fig. 2 beschriebenen Zahnhaltebremse 110 in der Verriegelungsstellung handeln.

Eine Erstreckungslänge zumindest einer Mehrzahl von sich auf der ersten Seite 260 befindlichen Ankerzähnen 300 ist gemäß diesem Ausführungsbeispiel größer als eine Erstreckungslänge zumindest einer Mehrzahl von sich auf der zweiten Seite 265 befindlichen Ankerzähnen 300.

Zusätzlich oder alternativ ist eine weitere Erstreckungslänge einer Mehrzahl von sich auf einer weiteren ersten Seite der Mitnahmehauptoberfläche befindlichen Mitnahmezähnen 305 gemäß diesem Ausführungsbeispiel gleich einer weiteren Erstreckungslänge zumindest einer Mehrzahl von sich auf einer gegenüberliegenden weiteren zweiten Seite der Mitnahmehauptoberfläche befindlichen Mitnahmezähnen 305. Die erste Seite 260 ist gemäß diesem Ausführungsbeispiel der weiteren ersten Seite der Mitnahmehauptoberfläche zugewandt angeordnet und die zweite Seite 265 ist gemäß diesem Ausführungsbeispiel der weiteren zweiten Seite der Mitnahmehauptoberfläche zugewandt angeordnet.

In der gezeigten Situation greifen die Ankerzähne 300 und die Mitnahmezähne 305 an beiden Seiten 260, 265 der Ankerscheibe 205 vollständig ineinander ein und sind dabei vollständig mechanisch kontaktiert.

Die Erstreckungslänge der Ankerzähne ist demnach gemäß diesem Ausführungsbeispiel in einem der Detektionseinrichtung 215 zugewandten Ankerkranzabschnitt des Ankerscheibenzahnkranzes länger als in einem der Detektionseinrichtung 215 abgewandten weiteren Ankerkranzabschnitt des Ankerscheibenzahnkranzes. Bei dem Mitnahmeelement 220 sind die Mitnahmezähne 305 optional nicht schräg angeordnet oder abgefräst. Gemäß diesem Ausführungsbeispiel weisen alle Mitnahmezähne 305 die maximale Zahnhöhe der Ankerzähne 300 auf.

Gemäß einem alternativen Ausführungsbeispiel ist eine Erstreckungslänge zumindest einer Mehrzahl von sich auf der ersten Seite 260 befindlichen Ankerzähnen 300 gleich einer Erstreckungslänge zumindest einer Mehrzahl von sich auf der zweiten Seite 265 befindlichen Ankerzähnen und/oder eine weitere Erstreckungslänge einer Mehrzahl von sich auf einer weiteren ersten Seite der Mitnahmehauptoberfläche befindlichen Mitnahmezähnen 305 größer als eine weitere Erstreckungslänge zumindest einer Mehrzahl von sich auf einer gegenüberliegenden weiteren zweiten Seite der Mitnahmehauptoberfläche befindlichen Mitnahmezähnen 305. Eine weitere Erstreckungslänge der Mitnahmezähne des Mitnahmeelements 220 ist demnach gemäß dem alternativen Ausführungsbeispiel in einem der Detektionseinrichtung 215 zugewandten Mitnahmekranzabschnitt des Mitnahmezahnkranzes länger als in einem der Detektionseinrichtung 215 abgewandten weiteren Mitnahmekranzabschnitt des Mitnahmezahnkranzes.

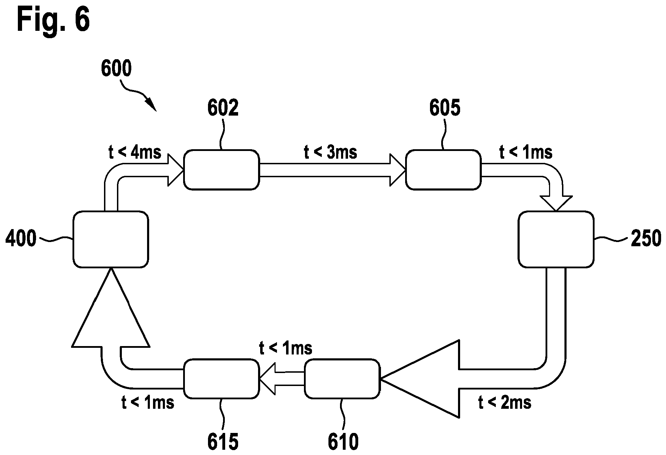

Im Folgenden werden Ausführungsbeispiele der Zahnhaltebremse 110 noch einem mit anderen Worten beschrieben:
Die Zahnhaltebremse 110 ermöglicht gemäß diesem Ausführungsbeispiel eine Sicherstellung einer ordnungsgemäßen Detektierung mittels unterschiedlicher Zahnhöhen. Bei einem zeitlichen Ablauf einer Detektierung mittels Endschaltern der Detektionseinrichtung 215 ist darauf zu achten, dass bei einem Verriegelungsvorgang zuerst mechanisch verriegelt ist, d. h., die Zähne 300, 305 miteinander im Eingriff sind, und danach erst der Endschalter den Verriegelungszustand meldet. Bei einem Entriegelungsvorgang soll zuerst der Endschalter den Entriegelungszustand detektieren, bevor die Zähne außer Eingriff sind. Dadurch ist sichergestellt, dass ein nicht erlaubter Zustand "mechanisch entriegelt und elektrisch verriegelt" nicht auftritt. Da die Endschalter der Detektionseinrichtung 215 eine Schalthysterese aufweisen, wobei ein Schaltpunkt und ein Rückschaltpunkt um gemäß einem Ausführungsbeispiel mehr als einen Millimeter versetzt sind, ist es für die Direktabtastung der Ankerscheibe notwendig, dass die Höhe der Ankerzähne 300 oder Mitnahmezähne 305 gemäß diesem Ausführungsbeispiel größer sind als ein Millimeter, da andernfalls zwar der Schaltpunkt innerhalb des Zahneingriffs liegt, jedoch der Rückschaltpunkt außerhalb des Zahneingriffs kommt und somit kurzzeitig der nicht erlaubte Zustand "mechanisch entriegelt und elektrisch verriegelt" auftreten könnte. Bei der hier vorgestellten Zahnhaltebremse 110 ist dieser unerwünschte nicht erlaubte Zustand dank der im Bereich der Detektionseinrichtung 215 langen Zähne 300, 305 verhindert, siehe hierzu auch Figur 6. Eine alternativ mögliche Abhilfemaßnahme ist, die Zähne generell zu erhöhen, jedoch entstünde dann im Bereich des zweiten Luftspaltabschnitts das Problem, dass dadurch auch der Hub, also eine Breite des zweiten Luftspalts, erhöht werden müsste. Dies würde wiederum Einfluss auf die erreichbaren Magnetkräfte haben, was nicht gewünscht ist.

Im Folgenden wird anhand eines Ausführungsbeispiels ausgeführt, auf welche Weise die Ankerzähne 300 und die Mitnahmezähne 305 in Eingriff kommen bzw. unter Drehmomenteinfluss bleiben. Bei diesem Ausführungsbeispiel wird eine Magnetkraft der Magneteinrichtung 210 fürs Entriegeln verwendet.

Der Zahneingriff erfolgt bei diesem Ausführungsbeispiel dadurch, dass die Ankerscheibe 205 über eine Federkraft zumindest einer Feder vom Magnetkörper der Magneteinrichtung 210 in Richtung des Mitnahmeelements 220 gedrückt wird. Diese zumindest eine Feder definiert gemeinsam mit der Zahnform der Ankerzähne 300 und der Mitnahmezähne 305 inklusive der vorhanden Reibungsverhältnisse das mögliche Haltemoment der Zahnhaltebremse 110. Dabei können die Winkel der Ankerzähne 300 und der Mitnahmezähne 305 in beide Drehrichtungen unterschiedlich gewählt werden. Je flacher der Winkel, umso weniger Haltemoment besteht bei ansonsten gleichen Bedingungen. Die zum Trennen der Ankerscheibe 205 von dem Mitnahmeelement 220 erforderliche Magnetkraft der Magneteinrichtung 210 ergibt sich aus der gewählten zumindest einen Feder, der Zahnform und des anliegenden Drehmoments beim Entriegelungsvorgang.

**Fig. 4** zeigt eine schematische Querschnittsdarstellung einer Zahnhaltebremse 110 gemäß einem Ausführungsbeispiel. Dabei kann es sich die in Figur 3 beschriebene Zahnhaltebremse 110 handeln, mit dem Unterschied, dass die Ankerscheibe 205 gemäß diesem Ausführungsbeispiel in der Entriegelungsstellung 400 angeordnet ist.

In der Entriegelungsstellung 400 ist die Ankerscheibe 205 beabstandet zu dem Mitnahmeelement 220 angeordnet und kontaktiert dieses nicht. Zwischen den Ankerzähnen und den Mitnahmezähnen ist ein durchgängiger Spalt angeordnet. Die Ankerscheibe 205 kontaktiert die Detektionseinrichtung 215 nicht. Die erste Hauptoberfläche der Ankerscheibe 205 liegt gemäß diesem Ausführungsbeispiel an der Magnethauptoberfläche der Magneteinrichtung 210 an. Gemäß diesem Ausführungsbeispiel liegt die Ankerscheibe 205 hierbei über eine gesamte Länge der Magnethauptoberfläche bündig an der Magnethauptoberfläche an.

Wenn die Zahnhaltebremse 110 von der in Fig. 4 gezeigten Entriegelungsstellung 400 in die in Fig. 3 gezeigte Verriegelungsstellung überführt wird, greifen Ankerzähne und Mitnahmezähne gemäß einem Ausführungsbeispiel zumindest an der ersten Seite der Ankerscheibe 205, also im Bereich der Detektionseinrichtung 215, bereits teilweise ineinander, ohne, dass von der Detektionseinrichtung 215 ein Verriegelungssignal ausgegeben wird. Erst wenn die Ankerzähne und Mitnahmezähne noch weiter ineinandergreifen, also ein erster Teilverriegelungszustand, auch als Schaltpunkt bezeichnet, erreicht wird, wird von der Detektionseinrichtung 215 das Verriegelungssignal ausgegeben.

Wenn die Zahnhaltebremse 110 von der in Fig. 3 gezeigten Verriegelungsstellung in die in Fig. 4 gezeigte Entriegelungsstellung 400 überführt wird, greifen Ankerzähne und Mitnahmezähne gemäß einem Ausführungsbeispiel zumindest an der ersten Seite der Ankerscheibe 205, also im Bereich der Detektionseinrichtung 215, noch teilweise ineinander, wobei von der Detektionseinrichtung 215 ein Entriegelungssignal ausgegeben wird. Somit wird das Entriegelungssignal bereits ausgegeben, wenn die Ankerzähne und Mitnahmezähne noch ineinandergreifen, also ein zweiter Teilverriegelungszustand, auch als Rückschaltpunkt bezeichnet, erreicht wird. Dabei können der erster Teilverriegelungszustand und der zweite Teilverriegelungszustand einander entsprechen oder sich unterscheiden. Beispielhaft ist dem ersten Teilverriegelungszustand eine größere Eingriffstiefe zwischen Ankerzähnen und Mitnahmezähnen zugeordnet als dem zweiten Teilverriegelungszustand.

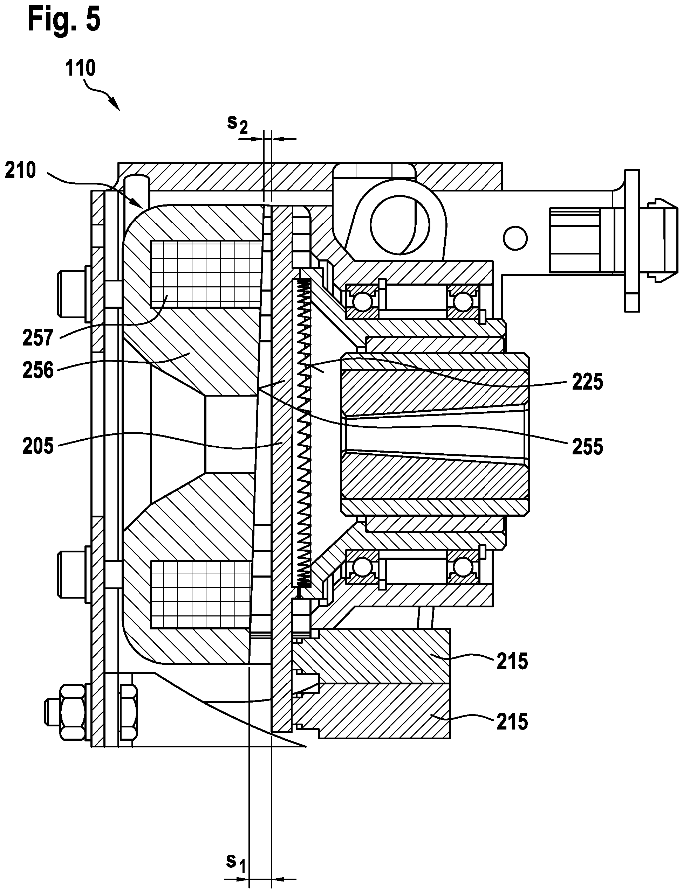

**Fig. 5** zeigt eine schematische Querschnittsdarstellung einer Zahnhaltebremse 110 gemäß einem Ausführungsbeispiel. Dabei kann es sich um eine der in einer der vorangehenden Figuren beschriebenen Zahnhaltebremsen 110 in der Verriegelungsstellung handeln, mit dem Unterschied, dass die Magnethauptoberfläche 155 gemäß diesem Ausführungsbeispiel im Wesentlichen schräg gegenüber der Mitnahmehauptoberfläche 225 verlaufend angeordnet ist. Die Magnethauptoberfläche 255 ist gemäß diesem Ausführungsbeispiel schräg gegenüber der weiteren Magnethauptoberfläche der Magneteinrichtung 210 verlaufend angeordnet. Die Magneteinrichtung 210 ist demnach insgesamt keilförmig ausgestaltet. Ein Abstand zwischen der Magnethauptoberfläche 255 und der weiteren Magnethauptoberfläche ist in einem der Detektionseinrichtung zugewandten Bereich der Magneteinrichtung 210 kleiner als ein Abstand zwischen der Magnethauptoberfläche 255 und der weiteren Magnethauptoberfläche ist an einem dem Flügel zugewandten Bereich der Magneteinrichtung 210.

Die Magnethauptoberfläche 155 ist gemäß diesem Ausführungsbeispiel im Wesentlichen schräg gegenüber der ersten Hauptoberfläche der Ankerscheibe angeordnet.

Gemäß diesem Ausführungsbeispiel sind die erste Hauptoberfläche und die zweite Hauptoberfläche der Ankerscheibe 205 parallel zueinander verlaufend ausgerichtet, wodurch die Ankerscheibe 205 gemäß diesem Ausführungsbeispiel nicht keilförmig ausgeformt ist. Ein Winkel zwischen der Magnethauptoberfläche 255 und der ersten Hauptoberfläche entspricht gemäß diesem Ausführungsbeispiel einem in den vorangehenden Figuren gezeigten Winkel zwischen der Magnethauptoberfläche 255 und der ersten Hauptoberfläche in der Verriegelungsstellung.

Gemäß einem alternativen Ausführungsbeispiel entspricht eine Ausformung der Ankerscheibe 205 der in einer der Figuren 1 bis 4 beschriebenen keilförmigen Ankerscheiben 205. Ein Hub der Ankerscheibe 205 ist dann gemäß dem alternativen Ausführungsbeispiel größer.

**Fig. 6** zeigt ein Zustandsdiagramm 600 einer Verzahnung einer Zahnhaltebremse gemäß einem Ausführungsbeispiel. Dabei kann es sich um eine der in einer der vorangehenden Figuren beschriebenen Zahnhaltebremsen mit unterschiedlichen Zahnhöhen handeln. Ein Hub der Ankerscheibe von der Entriegelungsstellung 400 zu der Verriegelungsstellung 250 beträgt gemäß diesem Ausführungsbeispiel zwischen der Magneteinrichtung und einem Endschalter mehr als 3 Millimeter, hier beispielhaft 3,6 Millimeter.

Ein erster Block des Zustandsdiagramms 600 kennzeichnet gemäß diesem Ausführungsbeispiel die Entriegelungsstellung 400. Ein Zahneingriff der Zahnhaltebremse beträgt in der Entriegelungsstellung 400 gemäß diesem Ausführungsbeispiel minus 1,1 Millimeter und ein Spalt zwischen der Ankerscheibe und der Magneteinrichtung beträgt null Millimeter. Eine Verzahnung ist in der Entriegelungsstellung 400 entriegelt und die Detektionseinrichtung sendet oder stellt ein Endschaltersignal in Form eines Entriegelungssignals bereit, das die Entriegelungsstellung 400 der Zahnhaltebremse repräsentiert, da die Ankerscheibe die Detektionseinrichtung mechanisch nicht kontaktiert. Bei einem im Folgenden beschriebenen Verriegelungsvorgang von der Entriegelungsstellung 400 zu der Verriegelungsstellung 250 passiert die Zahnhaltebremse einen Teilverriegelungszustand 602 und einen Schaltpunkt 605. Nach weniger als vier Millisekunden ist die Zahnhaltebremse gemäß diesem Ausführungsbeispiel von der Entriegelungsstellung 400 in den Teilverriegelungszustand 602 bewegt angeordnet. In dem Teilverriegelungszustand 602 sind die Zähne mit mehr als 0 Millimeter Zahneingriff in Eingriff angeordnet. Ein Spalt zwischen der Magneteinrichtung und der Ankerscheibe beträgt in dem Teilverriegelungszustand 602 im Bereich der Detektionseinrichtung gemäß diesem Ausführungsbeispiel mehr als 1,1 Millimeter. Eine Verzahnung ist im Teilverriegelungszustand 602 verriegelt und die Detektionseinrichtung sendet oder stellt das Endschaltersignal bereit, das die Entriegelungsstellung 400 der Zahnhaltebremse repräsentiert, da die Ankerscheibe die Detektionseinrichtung mechanisch nicht kontaktiert. Nach weniger als drei Millisekunden ist die Zahnhaltebremse gemäß diesem Ausführungsbeispiel von dem Teilverriegelungszustand 602 in zu dem Schaltpunkt 605 bewegt angeordnet. Der Schaltpunkt 605 ist gemäß diesem Ausführungsbeispiel bei einem Zahneingriff zwischen 1,55 und 2,25 Millimeter erreicht. Ein Spalt zwischen der Magneteinrichtung und der Ankerscheibe beträgt im Bereich der Detektionseinrichtung bei einem Erreichen des Schaltpunkts 605 gemäß diesem Ausführungsbeispiel 2,65 bis 3,35 Millimeter. Eine Verzahnung ist an dem Schaltpunkt 605 verriegelt und die Detektionseinrichtung sendet oder stellt ein Endschaltersignal in Form eines Verriegelungssignals bereit, das die Verriegelungsstellung 250 der Zahnhaltebremse repräsentiert, da die Ankerscheibe die Detektionseinrichtung nun mechanisch kontaktiert. Nach weniger als einer Millisekunde ist die Zahnhaltebremse gemäß diesem Ausführungsbeispiel von dem Schaltpunkt 605 in die Verriegelungsstellung 250 bewegt angeordnet. In der Verriegelungsstellung 250 beträgt der Zahneingriff gemäß diesem Ausführungsbeispiel 2,5 Millimeter. Ein Spalt zwischen der Magneteinrichtung und der Ankerscheibe beträgt im Bereich der Detektionseinrichtung in der Verriegelungsstellung 250 gemäß diesem Ausführungsbeispiel 3,6 Millimeter. Eine Verzahnung ist in der Verriegelungsstellung 250 verriegelt und die Detektionseinrichtung sendet oder stellt das Endschaltersignal bereit, das die Verriegelungsstellung 250 der Zahnhaltebremse repräsentiert, da die Ankerscheibe die Detektionseinrichtung mechanisch kontaktiert.

Bei einem im Folgenden beschriebenen Entriegelungsvorgang von der Verriegelungsstellung 250 zu der Entriegelungsstellung 400 passiert die Zahnhaltebremse einen Rückschaltpunkt 610 und einen Freigabezustand 615. Nach weniger als zwei Millisekunden erreicht die Zahnhaltebremse gemäß diesem Ausführungsbeispiel von der Verriegelungsstellung 250 den Rückschaltpunkt 610. Der Rückschaltpunkt 610 ist gemäß diesem Ausführungsbeispiel bei einem Zahneingriff zwischen 1,05 und 0,35 Millimeter erreicht. Ein Spalt zwischen der Magneteinrichtung und der Ankerscheibe beträgt im Bereich der Detektionseinrichtung bei einem Erreichen des Rückschaltpunkts 610 gemäß diesem Ausführungsbeispiel 2,15 bis 1,45 Millimeter. Eine Verzahnung ist an dem Rückschaltpunkt 610 verriegelt und die Detektionseinrichtung sendet oder stellt das Endschaltersignal bereit, das die Entriegelungsstellung 400 der Zahnhaltebremse repräsentiert, da die Ankerscheibe die Detektionseinrichtung mechanisch nicht kontaktiert. Nach weniger als einer Millisekunde erreicht die Zahnhaltebremse gemäß diesem Ausführungsbeispiel von dem Rückschaltpunkt 610 den Freigabezustand 615. Der Freigabezustand 615 ist gemäß diesem Ausführungsbeispiel bei einem Zahneingriff von 0 Millimetern erreicht. Ein Spalt zwischen der Magneteinrichtung und der Ankerscheibe beträgt im Bereich der Detektionseinrichtung in dem Freigabezustand 615 gemäß diesem Ausführungsbeispiel 1,1 Millimeter oder weniger. Eine Verzahnung ist in dem Freigabezustand 615 entriegelt und die Detektionseinrichtung sendet oder stellt das Endschaltersignal bereit, das die Entriegelungsstellung 400 der Zahnhaltebremse repräsentiert, da die Ankerscheibe die Detektionseinrichtung mechanisch nicht kontaktiert. Nach weniger als einer Millisekunden erreicht die Zahnhaltebremse gemäß diesem Ausführungsbeispiel von dem Freigabezustand 615 die Entriegelungsstellung 400.

Um keinen negativen Einfluss auf die Magnetkräfte zu haben, sind nur die Zähne im Bereich des ersten Luftspaltabschnitts, also die der Detektionseinrichtung zugewandt angeordneten Zähne, wesentlich erhöht ausgeformt, da hier auch der Hub, also der Luftspalt, größer als drei Millimeter ist. Im Bereich des gegenüberliegenden zweiten Luftspaltabschnitts bleiben die Zahnhöhen unverändert oder kürzer. Damit ist sichergestellt, dass der Schaltpunkt 605 und der Rückschaltpunkt 610 innerhalb des Zahneingriffs liegen.

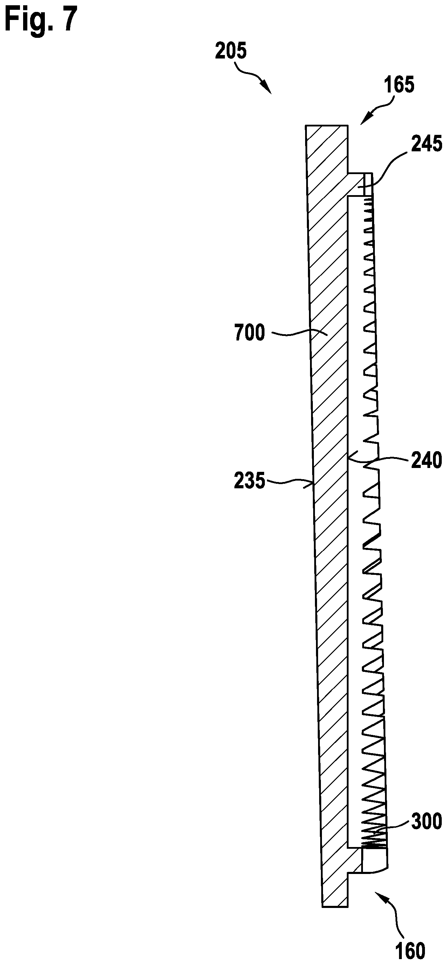

**Fig. 7** zeigt eine seitliche Querschnittsdarstellung einer Ankerscheibe 205 einer Zahnhaltebremse gemäß einem Ausführungsbeispiel. Dabei kann es sich um eine der in einer der vorangegangenen Figuren beschriebenen Ankerscheiben 205 mit unterschiedlichen Zahnhöhen handeln. Der Ankerscheibenzahnkranz 245 ist gemäß diesem Ausführungsbeispiel auf der zweiten Hauptoberfläche 240 angeordnet. Die Ankerzähne 300 des Ankerscheibenzahnkranzes 245 ragen vollständig oder teilweise über die zweite Hauptoberfläche 240 hinaus. Eine Basisebene 700 der Ankerscheibe 205 ist gemäß diesem Ausführungsbeispiel im Schnitt keilförmig ausgeformt. Der Ankerscheibenzahnkranz 245 ist insgesamt ebenfalls im Schnitt keilförmig ausgeformt. Eine vorstellbare Verbindungslinie der Spitzen der Ankerzähne 300 und die erste Hauptoberfläche 235 sind gemäß diesem Ausführungsbeispiel parallel zueinander ausgerichtet.

Hergestellt ist die Ankerscheibe 205 gemäß diesem Ausführungsbeispiel derart, dass zuerst eine komplette Verzahnung mit maximaler Höhe gefertigt wurde. Danach sind die Zähne entsprechend abgefräst worden, wobei sich der Fräser dabei auf einer Ebene bewegte, welche schräg zur zweiten Hauptoberfläche 240 der Basisebene 700 liegt. Die Ankerzähne 300 auf der ersten Seite 160 sind nicht abgefräst und die Ankerzähne 300 auf der zweiten Seite 165 sind maximal reduziert worden. Gemäß einem Ausführungsbeispiel wurde fertigungstechnisch sinnvollerweise zuerst eine schräge Ebene gefräst und danach die Ankerzähne 300 gefertigt. Dabei tauchte der Zahnfräser mehr oder weniger tief in das Material ein.

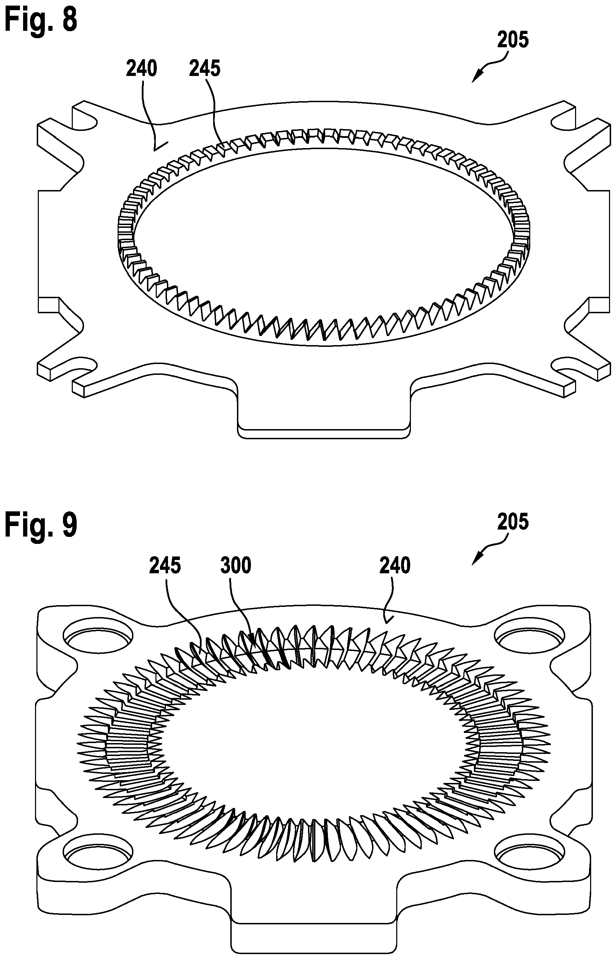

**Fig. 8** zeigt eine perspektivische Aufsicht auf eine Ankerscheibe 205 einer Zahnhaltebremse gemäß einem Ausführungsbeispiel. Dabei kann es sich um die in Figur 7 beschriebene Ankerscheibe 205 handeln. Zu Erkennen ist die zweite Hauptoberfläche 240, die gemäß diesem Ausführungsbeispiel eine plane Grundfläche darstellt, aus der der Ankerscheibenzahnkranz 245 hervorsteht. Die Ankerscheibe 205 weist am Rand mehrere Einbuchtungen auf, die im montierten Zustand der Ankerscheibe 205 beispielsweise verwendet werden können, um eine Drehbewegung der Ankerscheibe 205 zu verhindern.

**Fig. 9** zeigt eine perspektivische Aufsicht auf eine Ankerscheibe 205 einer Zahnhaltebremse gemäß einem Ausführungsbeispiel. Dabei kann es sich um eine der in Figur 8 beschriebene Ankerscheibe mit unterschiedlichen Zahnhöhen entsprechende Ankerscheibe 205 handeln, mit dem Unterschied, dass der Ankerscheibenzahnkranz 245 gemäß diesem Ausführungsbeispiel in einer in der zweiten Hauptoberfläche 240 angeordneten Ausnehmung angeordnet ist. Die Ankerzähne 300 des Ankerscheibenzahnkranzes 245 sind gemäß diesem Ausführungsbeispiel gegenüber der zweiten Hauptoberfläche 240 versenkt angeordnet.

Ein hier gezeigtes Ausführungsbeispiel der Ankerscheibe 205 realisiert eine fertigungsoptimierte und platzoptimierte Variante der in den Figuren 7 bis 8 gezeigten Ankerscheibe 205. Die Ankerzähne 300 sind gemäß diesem Ausführungsbeispiel in der Ankerscheibe 205 integriert.

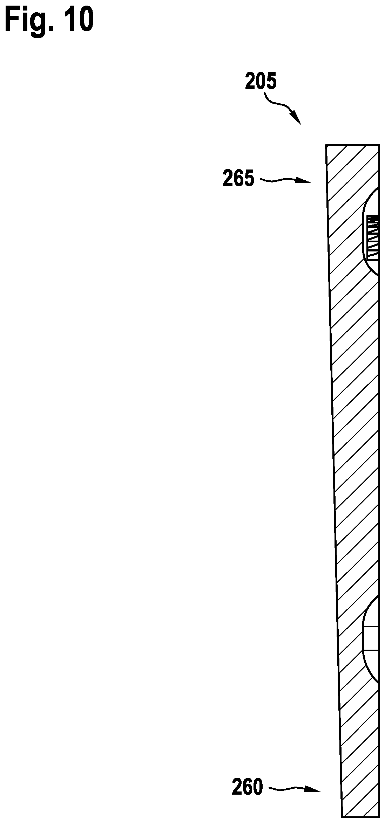

**Fig. 10** zeigt eine seitliche Querschnittsdarstellung einer Ankerscheibe 205 einer Zahnhaltebremse gemäß einem Ausführungsbeispiel. Dabei kann es sich um die in Figur 9 beschriebene Ankerscheibe 205 handeln. Zu Erkennen ist, dass sich die Ankerscheibe 205 ausgehend von der zweiten Seite 265 in Richtung der ersten Seite 260 verjüngt. Somit weist die Ankerscheibe 205 an der ersten Seite 260 eine geringere Dicke als an der zweiten Seite 265 auf.

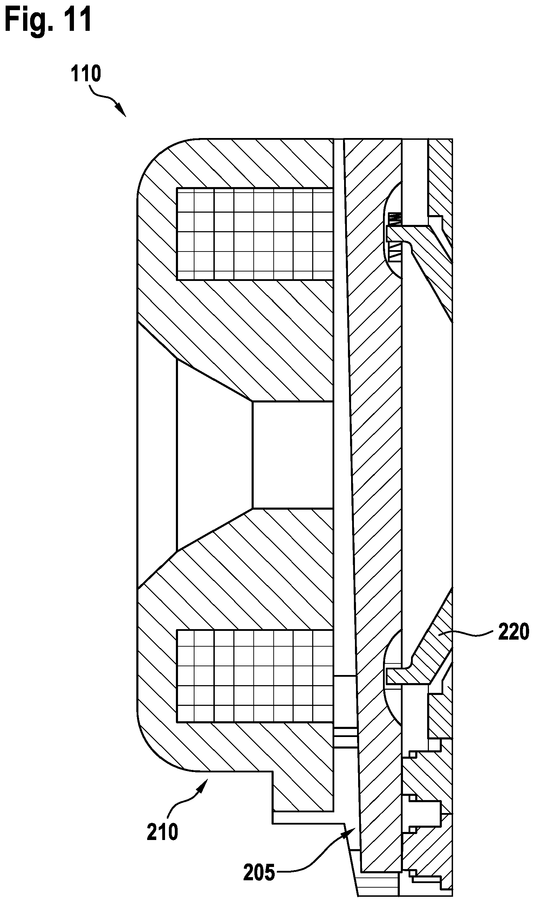

**Fig. 11** zeigt eine schematische Querschnittsdarstellung einer Zahnhaltebremse 110 gemäß einem Ausführungsbeispiel. Dabei kann es sich um eine der in einer der Figuren 1 bis 4 beschriebenen Zahnhaltebremsen 110 in der Verriegelungsstellung handeln, wobei die Zahnhaltebremse 110 gemäß diesem Ausführungsbeispiel die in den Figuren 9 bis 10 beschriebene Ankerscheibe 205 mit integrierten Ankerzähnen aufweist.

Gemäß einem alternativen Ausführungsbeispiel sind die Ankerzähne auf der Ankerscheibe umlaufend gleich hoch und die Mitnahmezähne des Mitnahmeelements 220 sind unterschiedlich hoch oder schräg realisiert und/oder die Mitnahmezähne sind in das Mitnahmeelement 220 integriert.

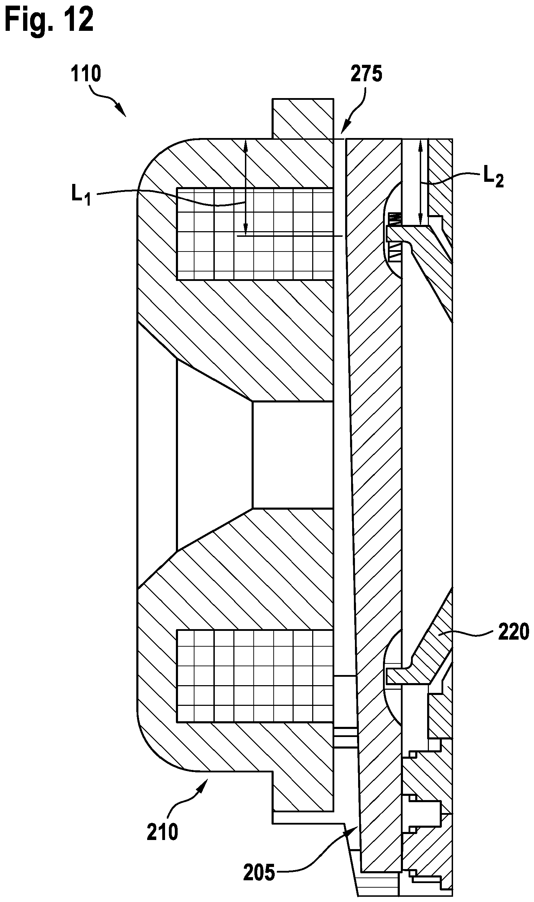

**Fig. 12** zeigt eine schematische Querschnittsdarstellung einer Zahnhaltebremse 110 gemäß einem Ausführungsbeispiel. Dabei kann es sich um die in Fig. 11 beschriebene Zahnhaltebremse 110 handeln, mit dem Unterschied, dass gemäß diesem Ausführungsbeispiel ein erster Oberflächenabschnitt L₁ der ersten Hauptoberfläche an der zweiten Seite der Ankerscheibe 205 und ein gegenüberliegender zweiter Oberflächenabschnitt L₂ der zweiten Hauptoberfläche an der zweiten Seite parallel zueinander angeordnet sind.

Gemäß diesem Ausführungsbeispiel ist eine Erhöhung der Magnetkraft aufgrund einer Flachstelle realisiert. Zur Erhöhung der Magnetkräfte auf die Ankerscheibe 205 ist hierbei über einen an den ersten Oberflächenabschnitt L₁ angrenzenden Bereich der Luftspalt 275 konstant oder parallel gehalten und erst danach erhöht sich der Luftspalt 275, also erweitert sich erst danach keilförmig zu der Detektionseinrichtung hin. Es entsteht dadurch beim Entriegelungsvorgang eine Kippbewegung der Ankerscheibe 205. Zuerst liegt die Ankerscheibe 205 beim Entriegeln flach im Bereich des ersten Oberflächenabschnitts L₁ an einem gegenüberliegenden Magnethauptoberflächenabschnitt der Magnethauptoberfläche der Magneteinrichtung 210 an und kippt dann auf die restliche große Fläche der Magnethauptoberfläche. Gemäß diesem Ausführungsbeispiel weist der erste Oberflächenabschnitt L₁ und/oder der zweite Oberflächenabschnitt L₂ eine Länge von einem Siebtel einer Gesamtlänge der ersten und/oder zweiten Hauptoberfläche auf. Gemäß einem alternativen Ausführungsbeispiel weist die in den Figuren 7 bis 8 beschriebene Ankerscheibe 205 die hier vorgestellten Oberflächenabschnitte L₁, L₂ auf.

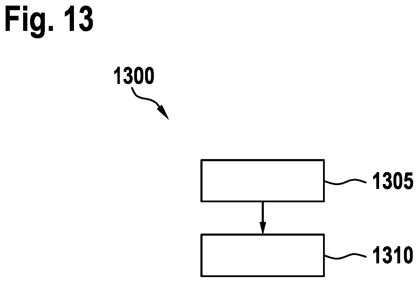

**Fig. 13** zeigt ein Ablaufdiagramm eines Verfahrens 1300 zum Betreiben einer Zahnhaltebremse gemäß einem Ausführungsbeispiel. Dabei kann es sich um eine der in einer der Figuren 1, 2, 3, 4, 5, 6, 11 oder 12 beschriebenen Zahnhaltebremsen handeln.

Das Verfahren 1300 umfasst einen Schritt 1305 des Bewirkens und einen Schritt 1310 des Herbeiführens. Im Schritt des Bewirkens 1305 wird ein Bewegen der Ankerscheibe von der Entriegelungsstellung in die Verriegelungsstellung bewirkt, um das Drehen der Welle in zumindest einer Richtung zu verhindern. Im Schritt 1310 des Herbeiführens wird ein Bewegen der Ankerscheibe von der Verriegelungsstellung in die Entriegelungsstellung herbeigeführt, um das Drehen der Welle in beide Richtungen freizugeben.

Der Schritt des Bewirkens 1305 wird gemäß diesem Ausführungsbeispiel vor oder gemäß einem alternativen Ausführungsbeispiel nach dem Schritt 1310 des Herbeiführens ausgeführt.

Die hier vorgestellten Verfahrensschritte können wiederholt sowie in einer anderen als in der beschriebenen Reihenfolge ausgeführt werden, um ein wechselweises Freigeben und Sperren der Welle zu bewirken.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### BEZUGSZEICHENLISTE

- L₁: erster Oberflächenabschnitt
- L₂: zweiter Oberflächenabschnitt
- s₁: erster Luftspaltabschnitt
- s₂: zweiter Luftspaltabschnitt

- 100: Fahrzeug
- 105: Tür
- 110: Zahnhaltebremse

- 200: Welle
- 205: Ankerscheibe
- 210: Magneteinrichtung
- 215: Detektionseinrichtung
- 220: Mitnahmeelement
- 225: Mitnahmehauptoberfläche
- 230: Mitnahmezahnkranz
- 235: erste Hauptoberfläche
- 240: zweite Hauptoberfläche
- 245: Ankerscheibenzahnkranz
- 250: Verriegelungsstellung
- 255: Magnethauptoberfläche
- 256: Magnetkörper
- 257: Magnetspule
- 260: erste Seite
- 265: zweite Seite
- 270: Flügel
- 275: Luftspalt

- 300: Ankerzähne
- 305: Mitnahmezähne

- 400: Entriegelungsstellung
- 600: Zustandsdiagramm
- 602: Teilverriegelungszustand
- 605: Schaltpunkt
- 610: Rückschaltpunkt
- 615: Freigabezustand

- 700: Basisebene

- 1300: Verfahren zum Betreiben einer Zahnhaltebremse
- 1305: Schritt des Bewirkens
- 1310: Schritt des Herbeiführens

## Patentansprüche

1. Zahnhaltebremse (110) für eine Tür (105) für ein Fahrzeug (100), wobei die die Zahnhaltebremse (110) die folgenden Merkmale aufweist:
eine Welle (200), welche an einem Ende ein Mitnahmeelement (220) mit einer Mitnahmehauptoberfläche (225) mit einem Mitnahmezahnkranz (230) ausformt, der eine Mehrzahl von Mitnahmezähnen (305) aufweist;
eine Ankerscheibe (205), die eine erste Hauptoberfläche (235) und eine der ersten Hauptoberfläche (235) gegenüberliegend angeordnete zweite Hauptoberfläche (240) aufweist, wobei an der zweiten Hauptoberfläche (240) ein Ankerscheibenzahnkranz (245) mit einer Mehrzahl von Ankerzähnen (300) angeordnet ist, wobei die Ankerscheibe (205) in einer Verriegelungsstellung (250) derart angeordnet ist, dass die Ankerzähne (300) in die Mitnahmezähne (305) greifen, um ein Drehen der Welle (200) in zumindest einer Richtung zu verhindern und in einer Entriegelungsstellung (400) derart angeordnet ist, dass die Ankerzähne (300) beabstandet zu den Mitnahmezähnen (305) angeordnet sind, um das Drehen der Welle (200) in beide Richtungen freizugeben;
eine Magneteinrichtung (210, 256, 257) mit einer der Ankerscheibe (205) zugewandt angeordneten Magnethauptoberfläche (255), wobei die Magneteinrichtung (210, 256, 257) dazu ausgebildet ist, um die Ankerscheibe (205) zwischen der Verriegelungsstellung (250) und der Entriegelungsstellung (400) zu bewegen, wobei in der Verriegelungsstellung (250) der Ankerscheibe (205) die erste Hauptoberfläche (235) der Ankerscheibe (205) und die Magnethauptoberfläche (255) im Wesentlichen schräg zueinander verlaufend angeordnet sind; und
eine Detektionseinrichtung (215), die dazu ausgebildet ist, um die Verriegelungsstellung (250) und/oder die Entriegelungsstellung (400) zu detektieren, wobei die Detektionseinrichtung (215) im Bereich einer ersten Seite (260) der Ankerscheibe (205) angeordnet ist.

2. Zahnhaltebremse (110) gemäß Anspruch 1, bei der die Ankerscheibe (205) zwischen der Magneteinrichtung (210, 256, 257) und der Welle (200) angeordnet ist, wobei in der Verriegelungsstellung (250) zwischen der Magneteinrichtung (210, 256, 257) und der Ankerscheibe (205) ein keilförmiger Luftspalt (275) angeordnet ist.

3. Zahnhaltebremse (110) gemäß Anspruch 2, bei der der Luftspalt (275) an der ersten Seite (260) der Ankerscheibe (205) breiter ist, als an einer der ersten Seite (260) gegenüberliegenden zweiten Seite (265) der Ankerscheibe (205).

4. Zahnhaltebremse (110) gemäß einem der vorangegangenen Ansprüche, bei der die Ankerscheibe (205) keilförmig ausgeformt ist.

5. Zahnhaltebremse (110) gemäß einem der vorangegangenen Ansprüche, bei der ein Abstand zwischen der ersten Hauptoberfläche (235) der Ankerscheibe (205) und der zweiten Hauptoberfläche (240) der Ankerscheibe (205) an der ersten Seite (260) der Ankerscheibe (205) kleiner ist, als an einer der ersten Seite (260) gegenüberliegenden zweiten Seite (265) der Ankerscheibe (205), wobei die erste Hauptoberfläche (235) und die zweite Hauptoberfläche (240) zwischen der ersten Seite (260) und der zweiten Seite (265) im Wesentlichen schräg zueinander verlaufend angeordnet sind.

6. Zahnhaltebremse (110) gemäß einem der vorangegangenen Ansprüche, bei der eine Erstreckungslänge zumindest einer Mehrzahl von sich auf der ersten Seite (260) befindlichen Ankerzähnen (300) gleich einer Erstreckungslänge zumindest einer Mehrzahl von sich auf einer der ersten Seite (260) abgewandten zweiten Seite (265) befindlichen Ankerzähnen (300) ist und/oder eine weitere Erstreckungslänge einer Mehrzahl von sich auf einer weiteren ersten Seite der Mitnahmehauptoberfläche (225) befindlichen Mitnahmezähnen (305) größer als eine weitere Erstreckungslänge zumindest einer Mehrzahl von sich auf einer gegenüberliegenden weiteren zweiten Seite der Mitnahmehauptoberfläche (225) befindlichen Mitnahmezähnen (305) ist.

7. Zahnhaltebremse (110) gemäß einem der Ansprüche 1 bis 5, bei der eine Erstreckungslänge zumindest einer Mehrzahl von sich auf der ersten Seite (260) befindlichen Ankerzähnen (300) größer als eine Erstreckungslänge zumindest einer Mehrzahl von sich auf einer der ersten Seite (260) gegenüberliegenden zweiten Seite (265) befindlichen Ankerzähnen (300) ist und/oder eine weitere Erstreckungslänge einer Mehrzahl von sich auf einer weiteren ersten Seite der Mitnahmehauptoberfläche (225) befindlichen Mitnahmezähnen (305) gleich einer weiteren Erstreckungslänge zumindest einer Mehrzahl von sich auf einer gegenüberliegenden weiteren zweiten Seite der Mitnahmehauptoberfläche (225) befindlichen Mitnahmezähnen (305) ist.

8. Zahnhaltebremse (110) gemäß einem der vorangegangenen Ansprüche, bei der ein erster Oberflächenabschnitt (L₁) der ersten Hauptoberfläche (235) an einer der ersten Seite (260) gegenüberliegenden zweiten Seite (265) der Ankerscheibe (205) und ein gegenüberliegender zweiter Oberflächenabschnitt (L₂) der zweiten Hauptoberfläche (240) an der zweiten Seite (265) parallel zueinander angeordnet sind.

9. Zahnhaltebremse (110) gemäß einem der vorangegangenen Ansprüche, bei der die Magnethauptoberfläche (255) im Wesentlichen schräg gegenüber der Mitnahmehauptoberfläche (225) verlaufend angeordnet ist.

10. Zahnhaltebremse (110) gemäß einem der vorangegangenen Ansprüche, bei der die Detektionseinrichtung (215) dazu angeordnet und ausgebildet ist, um in der Verriegelungsstellung (250) die Ankerscheibe (205) mechanisch zu kontaktieren und/oder in der Entriegelungsstellung (400) und in einem sich zwischen der Entriegelungsstellung (400) und der Verriegelungsstellung (250) befindlichen Teilverriegelungszustand (602) die Ankerscheibe (205) nicht zu kontaktieren.

11. Verfahren (1300) zum Betreiben einer Zahnhaltebremse (110) gemäß einem der vorangegangenen Ansprüche, wobei das Verfahren (1300) die folgenden Schritte umfasst:
Bewirken (1300) eines Bewegens der Ankerscheibe (205) von der Entriegelungsstellung (400) in die Verriegelungsstellung (250), um das Drehen der Welle (200) in zumindest einer Richtung zu verhindern; und
Herbeiführen (1305) eines Bewegens der Ankerscheibe (205) von der Verriegelungsstellung (250) in die Entriegelungsstellung (400), um das Drehen der Welle (200) in beide Richtungen freizugeben.

## Claims

1. A toothed holding brake (110) for a door (105) for a vehicle (100), the toothed holding brake (110) having the following features:
a shaft (200) which, at one end, forms a driver element (220) with a driver main surface (225) with a driver toothed rim (230) which has a plurality of driver teeth (305);
an armature disk (205) which has a first main surface (235) and a second main surface (240) which is arranged so as to lie opposite the first main surface (235), an armature disk toothed rim (245) with a plurality of armature teeth (300) being arranged on the second main surface (240), the armature disk (205) being arranged in a locked position (250) in such a way that the armature teeth (300) engage into the driver teeth (305), in order to prevent a rotation of the shaft (200) in at least one direction, and being arranged in an unlocked position (400) in such a way that the armature teeth (300) are arranged spaced apart from the driver teeth (305), in order to release the rotation of the shaft (200) in both directions;
a magnet device (210, 256, 257) with a magnet main surface (255) which is arranged so as to face the armature disk (205), the magnet device (210, 256, 257) being configured to move the armature disk (205) between the locked position (250) and the unlocked position (400), the first main surface (235) of the armature disk (205) and the magnet main surface (255) being arranged so as to run substantially obliquely with respect to one another in the locked position (250) of the armature disk (205); and
a detection device (215) which is configured to detect the locked position (250) and/or the unlocked position (400), the detection device (215) being arranged in the region of a first side (260) of the armature disk (205).

2. The toothed holding brake (110) as claimed in claim 1, in the case of which the armature disk (205) is arranged between the magnet device (210, 256, 257) and the shaft (200), a wedge-shaped air gap (275) being arranged between the magnet device (210, 256, 257) and the armature disk (205) in the locked position (250).

3. The toothed holding brake (110) as claimed in claim 2, in the case of which the air gap (275) is wider on the first side (260) of the armature disk (205) than on a second side (265) of the armature disk (205), which second side (265) lies opposite the first side (260).

4. The toothed holding brake (110) as claimed in one of the preceding claims, in the case of which the armature disk (205) is formed in a wedge-shaped manner.

5. The toothed holding brake (110) as claimed in one of the preceding claims, in the case of which a spacing between the first main surface (235) of the armature disk (205) and the second main surface (240) of the armature disk (205) is smaller on the first side (260) of the armature disk (205) than on a second side (265) of the armature disk (205), which second side (265) lies opposite the first side (260), the first main surface (235) and the second main surface (240) being arranged so as to run substantially obliquely with respect to one another between the first side (260) and the second side (265).

6. The toothed holding brake (110) as claimed in one of the preceding claims, in the case of which a first extent length of at least a plurality of armature teeth (300) which are situated on the first side (260) is identical to an extent length of at least a plurality of armature teeth (300) which are situated on a second side (265) which faces away from the first side (260), and/or a further extent length of a plurality of driver teeth (305) which are situated on a further first side of the driver main surface (225) is greater than a further extent length of at least a plurality of driver teeth (305) which are situated on an opposite further second side of the driver main surface (225).

7. The toothed holding brake (110) as claimed in one of claims 1 to 5, in the case of which an extent length of at least a plurality of armature teeth (300) which are situated on the first side (260) is greater than an extent length of at least a plurality of armature teeth (300) which are situated on a second side (265) which lies opposite the first side (260), and/or a further extent length of a plurality of driver teeth (305) which are situated on a further first side of the driver main surface (225) is identical to a further extent length of at least a plurality of driver teeth (305) which are situated on an opposite further second side of the driver main surface (225).

8. The toothed holding brake (110) as claimed in one of the preceding claims, in the case of which a first surface section (L₁) of the first main surface (235) on a second side (265) of the armature disk (205), which second side (265) lies opposite the first side (260), and an opposite second surface section (L₂) of the second main surface (240) on the second side (265) are arranged parallel to one another.

9. The toothed holding brake (110) as claimed in one of the preceding claims, in the case of which the magnet main surface (255) is arranged so as to run substantially obliquely with respect to the driver main surface (225).

10. The toothed holding brake (110) as claimed in one of the preceding claims, in the case of which the detection device (215) is arranged and configured to make mechanical contact with the armature disk (205) in the locked position (250), and/or not to make contact with the armature disk (205) in the unlocked position (400) and in a partially locked state (602) which is situated between the unlocked position (400) and the locked position (250).

11. A method (1300) for operating a toothed holding brake (110) as claimed in one of the preceding claims, the method (1300) comprising the following steps:
effecting (1300) a movement of the armature disk (205) from the unlocked position (400) into the locked position (250), in order to prevent the rotation of the shaft (200) in at least one direction; and
triggering (1305) a movement of the armature disk (205) from the locked position (250) into the unlocked position (400), in order to release the rotation of the shaft (200) in both directions.

## Revendications

1. Frein (110) de retenue denté d'une porte (105) d'un véhicule (100), dans lequel le frein (110) de retenue denté a les caractéristiques suivantes :
un premier arbre (200), qui forme, à un bout un élément (220) d'entraîneur ayant une surface (225) principale d'entraînement à couronne (230) dentée d'entraîneur, qui a une pluralité de dents (305) d'entraîneur ;
un disque (205) d'ancrage, qui a une première surface (235) principale et une deuxième surface (240) principale, disposées de manière opposée à la première surface (235) principale, dans lequel sur la deuxième surface (240) principale est disposée une couronne (245) dentée de disque d'ancrage ayant une pluralité de dents (300) d'ancrage, dans lequel le disque (205) d'ancrage est disposé, dans une position (250) de verrouillage, de manière à ce que les dents (300) d'ancrage prennent les dents (305) d'entraîneur, pour empêcher une rotation de l'arbre (200) dans au moins un sens, et est disposé, dans une position (400) de déverrouillage, de manière à ce que les dents (300) d'ancrage soient disposées à distance des dents (305) d'entraîneur pour autoriser la rotation de l'arbre (200) dans les deux sens ;
un dispositif (210, 256, 257) magnétique ayant une surface (255) principale magnétique tournée vers le disque (205) d'ancrage, dans lequel le dispositif (210, 256, 257) magnétique est constitué pour déplacer le disque (205) d'ancrage entre la position (250) de verrouillage et la position (400) de déverrouillage, dans lequel, dans la position (250) de verrouillage du disque (205) d'ancrage, la première surface (235) principale du disque (205) d'ancrage et la surface (255) principale magnétique sont disposées en s'étendant sensiblement de manière inclinée l'une par rapport à l'autre ; et
un dispositif (215) de détection, qui est constitué pour détecter la position (250) de verrouillage et/ou la position (400) de déverrouillage, dans lequel le dispositif (215) de détection est disposé dans la région d'une première face (260) du disque (205) d'ancrage.

2. Frein (110) de retenue denté suivant la revendication 1, dans lequel le disque (205) d'ancrage est disposé entre le dispositif (210, 256, 257) magnétique et l'arbre (200), dans lequel, dans la position (250) de verrouillage, un entrefer (275) cunéiforme est disposé entre le dispositif (210, 256, 257) magnétique et le disque (205) d'ancrage.

3. Frein (110) de retenue denté suivant la revendication 2, dans lequel l'entrefer (275) est plus large sur la première face (260) du disque (205) d'ancrage que sur une deuxième face (265), opposée à la première face (260), du disque (205) d'ancrage.

4. Frein (110) de retenue denté suivant l'une des revendications précédentes, dans lequel le disque (205) d'ancrage est cunéiforme.

5. Frein (110) de retenue denté suivant l'une des revendications précédentes, dans lequel une distance entre la première surface (235) principale du disque (205) d'ancrage et la deuxième surface (240) principale du disque (205) d'ancrage est plus petite sur la première face (260) du disque (205) d'ancrage que sur une deuxième face (265), opposée à la première face (260), du disque (205) d'ancrage, dans lequel la première surface (235) principale et la deuxième surface (240) principale sont disposées, en s'étendant de manière sensiblement inclinée l'une par rapport à l'autre, entre la première face (260) et la deuxième face (265).

6. Frein (110) de retenue denté suivant l'une des revendications précédentes, dans lequel une longueur d'extension d'au moins d'une pluralité de dents (300) d'ancrage, se trouvant sur la première face (260), est égale à une longueur d'extension d'au moins d'une pluralité de dents (300) d'ancrage se trouvant sur une deuxième face (265), non tournée vers la première face (260), et/ou une autre longueur d'extension d'une pluralité de dents (305) d'entraîneur, se trouvant sur une autre première face de la surface (225) principale d'entraînement, est plus grande qu'une autre longueur d'extension d'au moins une pluralité de dents (305) d'entraîneur, se trouvant sur une autre deuxième face, opposée de la surface (225) principale d'entraîneur.

7. Frein (110) de retenue denté suivant l'une des revendications 1 à 5, dans lequel une longueur d'extension d'au moins une pluralité de dents (300) d'ancrage se trouvant sur la première face (260), est plus grande qu'une longueur d'extension d'au moins une pluralité de dents (300) d'ancrage, se trouvant sur une deuxième face (265), opposée à la première face (260), et/ou une autre longueur d'extension d'une pluralité de dents (305) d'entraîneur, se trouvant sur une autre première face de la surface (225) principale d'entraîneur, est égale à une autre longueur d'extension d'au moins une pluralité de dents (305) d'entraîneur, se trouvant sur une autre deuxième face, opposée de la surface (225) principale d'entraîneur.

8. Frein (110) de retenue denté suivant l'une des revendications précédentes, dans lequel une première partie (L₁) de la première surface (235) principale sur une deuxième face (265), opposée à la première face (260), du disque (205) d'ancrage et une deuxième partie (L₂), opposée de la deuxième surface (240) principale sur la deuxième face (265), sont disposées parallèlement l'une à l'autre.

9. Frein (110) de retenue denté suivant l'une des revendications précédentes, dans lequel la surface (255) principale magnétique est disposée en s'étendant sensiblement de manière inclinée par rapport à la surface (225) principale d'entraîneur.

10. Frein (110) de retenue denté suivant l'une des revendications précédentes, dans lequel le dispositif (215) de détection est disposé et constitué pour être en contact mécaniquement dans la position (250) de verrouillage avec le disque (205) d'ancrage, et/ou pour ne pas se trouver en contact dans la position (400) de déverrouillage et dans un état (602) de verrouillage partiel, se trouvant entre la position (400) de déverrouillage et la position (250) de verrouillage, avec le disque (205) d'ancrage.

11. Procédé (1300) pour faire fonctionner un frein (110) de retenue denté suivant l'une des revendications précédentes, dans lequel le procédé (1300) comprend les stades suivants :
on provoque (1300) un mouvement du disque (205) d'ancrage, de la position (400) de déverrouillage à la position (250) de verrouillage, afin d'empêcher la rotation de l'arbre (200) dans au moins un sens ; et
on fait (1305) passer le disque (205) d'ancrage de la position (250) de verrouillage à la position (400) de déverrouillage, pour autoriser la rotation de l'arbre (200) dans les deux sens.
